# EUROPEAN PATENT APPLICATION

(11) **EP 1 113 179 A1**
(43) Date of publication of application: **04.07.2001**
(21) Application number: 00128506.3
(22) Date of filing: 27.12.2000
(51) Int. Cl.: F16C 1/22

(54) **A restraint and tension-adjustment unit for an elongate element, particularly a flexible control cable**

(30) Priority: 29.12.1999 IT TO991170
(71) Applicant: SILA HOLDING INDUSTRIALE S.r.l., 10121 Torino (IT)
(72) Inventor: Melis, Salvatore, 10093 Collegno (Torino) (IT)
(74) Representative: Fioravanti, Corrado

(57) **Abstract**

A restraint and tension-adjustment unit for an elongate element, particularly a flexible control cable, comprises a main body (3) for the anchorage of the elongate element (5) and a connection member (9) for connecting the unit (1) to a movable element, which are mounted for sliding relative to one another along a general axis of the unit, and adjustable means (20) for fixing the main body (3) relative to the connection member (9). The fixing means include a locking element (20) extending through the main body (3) and the fixing member (9), movable along an axis transverse the general axis, and having a toothed portion (22) with a toothing parallel to the axis of its movement. The locking element (20) can engage a portion of a corresponding toothing (15) associated with the connection member (9) in order to prevent the connection member (9) from sliding relative to the main body (3).

## Description

The present invention relates to a restraint and tension-adjustment unit for an elongate element, particularly a flexible control cable, comprising a main body for the anchorage of the elongate element and a connection member which are mounted for sliding relative to one another along a general axis of the unit, in which the connection member is intended for connecting the unit to a movable element the position of which can be controlled as a result of the movement of the elongate element, and adjustable means for fixing the main body relative to the connection member.

Owing to the presence of several elements which can slide relative to one another, units of the known type defined above have a complex structure which is quite expensive to produce and is not easy for the operator to install and adjust since it usually requires the use of both hands.

To overcome these problems, the subject of the invention is a unit of the type indicated above, characterized in that the fixing means include a locking element which extends through both the main body and the fixing member and is movable along an axis transverse the general axis, the locking element having a toothed portion the set of teeth of which is parallel to the axis of its movement and can engage a portion of a corresponding set of teeth associated with the connection member, the locking element being able to adopt a rest position in which its toothed portion is separated from the set of teeth of the connection member and an active position in which it engages the set of teeth of the connection member and in which sliding of the connection member relative to the main body is prevented.

By virtue of these characteristics, the unit according to the invention has a fairly simple structure which achieves very reliable restraint of the elongate element and effective adjustment of its tension, also allowing the operator installing the unit to operate extremely easily and quickly, in particular with the use of only one hand.

Further characteristics and advantages of the invention will become clearer from the following detailed description, given purely by way of non-limiting example, with reference to the appended drawings, in which:
Figure 1 is a perspective view of a unit according to the invention in its condition prior to installation and the desired adjustment,
Figure 2 is a sectioned side elevational view of the unit from the side indicated by the arrow II of Figure 1,
Figure 3 is an elevational view, sectioned along the line III-III of figure 2,
Figure 4 is a schematic perspective view of the unit in its installed condition corresponding to a desired adjustment,
Figure 5 is a sectioned side elevational view from the side indicated by the arrow V of Figure 4, and
Figure 6 is an elevational view sectioned transversely along the line VI-VI of Figure 4.

With reference to the drawings, a unit for restraining an elongate element 5, for example, the sliding cable of a flexible control cable of the push-pull type, is generally indicated 1. The unit 1 also permits adjustment of the tension of the cable 5 relative to a movable element (not shown in the drawings) which can be connected to the unit 1 on the side remote from the cable 5, for example, a lever member of a motor-vehicle gearbox, the position of which can be controlled as a result of the movement of the cable 5.

The unit 1 comprises a main body 3, preferably made of moulded plastics material, to which an end of the cable 5 is anchored by means of a known connection system such as a co-moulding process. The body 3 has a prismatic axial cavity 7, for example, of rectangular cross-section. An annular seat 6a is formed at the end of the main body 3 in the vicinity of the cable 5, for engagement by a bellows 6 of known type, made of elastomeric material.

A connection member 9 which is also advantageously made of moulded plastics material, has a portion of a prismatic shape corresponding to that of the cavity 7. This portion of the member 9 is inserted in the cavity 7 of the body 3 in a manner such that the body 3 and the member 9 form a prismatic coupling so that the member 9 can slide axially relative to the body 3.

A connecting portion 10 joined integrally to the sliding portion of the body 9 defines a seat for the insertion of an insert 11 which in turn defines a spherical seat of a ball joint.

The portion of the member 9 which can slide relative to the body 3 has an axial cavity 13 with an axis generally parallel to that of the cavity 7 of the body 3. This cavity has two opposed open sides between which two opposed faces extend; corresponding toothings 15 formed in the opposed faces have teeth extending in a direction perpendicular to the axis of the cavity 13.

A helical tension spring 16 is interposed between the body 3 and the portion of the member 9 which is slidable in the body 3 in order to keep the member 9 close to the end of the body 3 to which the cable 5 is connected, so that the unit 1 tends to adopt its configuration of minimum axial length under the action of the spring 16. In particular, the opposite ends of the spring 16 may be connected to the respective faces of the body 3 and of the member 9 by any known fixing system, for example, by co-moulding of a portion of each end of the spring 16 in the corresponding faces of the body 3 and of the member 9, respectively.

A transverse locking element 20, also advantageously made of plastics material, is inserted through a pair of corresponding, preferably rectangular, openings 23 and 25 of the body 3. The openings 23 and 25 are formed in opposed walls of the body 3 transversely relative to the faces of the member 9 having the toothings 15, so that, when the element 20 engages the cavity 13 of the member 9, the sliding of the member 9 along the cavity 7 is limited by the presence of the element 20.

The element 20 is substantially in the form of a prismatic rod with a cross-section corresponding to that of the openings 23 and 25 and has an externally smooth portion and, in the vicinity of one of its ends, an axial portion which has two opposed faces having toothings 22 the teeth of which correspond to the teeth of the sets 15.

A pair of legs 26 with an inverted V-shaped configuration extends from the end of the element 20 in the vicinity of the toothings 22. Respective stop appendages 26a are formed substantially transversely relative to the axis of the element 20 at the free ends of the legs 26 and, in their undeformed condition, open out to an extent greater than the width of the opening 25. The legs 26 are resiliently deformable so that the element 20 can be inserted in the body 3 through its openings 23 and 25 and through the cavity 13 of the member 9 and the legs can snap open as soon as they have passed through the opening 25 so that interference between the appendages 26a and the edges of the opening 25 prevents the element 20 from accidentally slipping out of the body 3.

An enlarged head 24, wider than the respective opening 23, is formed at the axial end of the element 20 remote from the legs 26 to prevent this end from passing through the opening 23.

Between the enlarged head 24 of the element 20 and the wall of the body 3 facing the head 24, there is a helical spring 27 which surrounds the element 20 and urges the head 24 away from the body 3.

Means 29 for stopping the movement of the element 20 are formed, preferably integrally with the body 3, on the wall of the body 3 on which one end of the spring 27 bears. The means comprise a hook 31 which can engage the head 24 of the element 20 and which is fixed to a flexible pillar 33 so that, in the undeformed condition of the pillar 33, the hook 31 engages the upper surface of the enlarged head 24, holding it close to the body 3 against the force of the spring 27.

An auxiliary hook 31a, associated with the stopping means 29, above the hook 31, defines a seat 31b for the engagement of a portion of the head 24 when the element 20 is in the position in which its toothings 22 are in engagement with the toothings 15 of the member 9. An operating appendage 32 extends from the pillar 33 in a position in the vicinity of the auxiliary hook 31a and can be operated by means of a user's finger in order to bend the pillar 33.

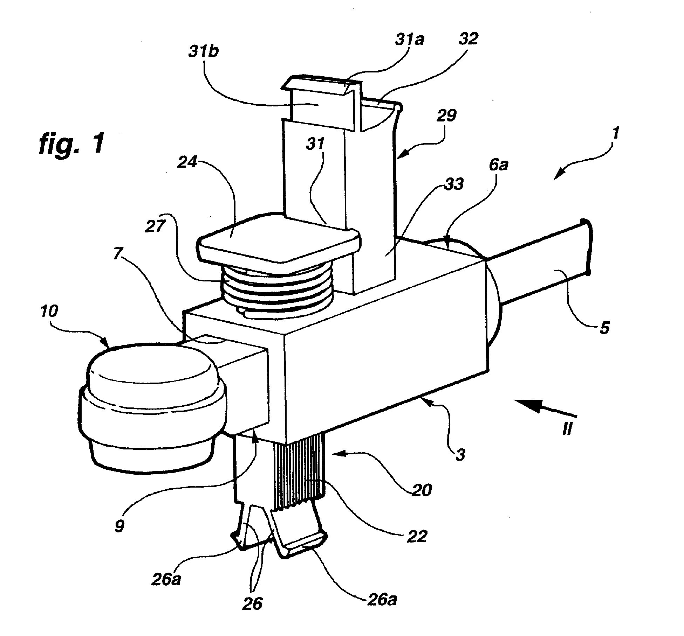

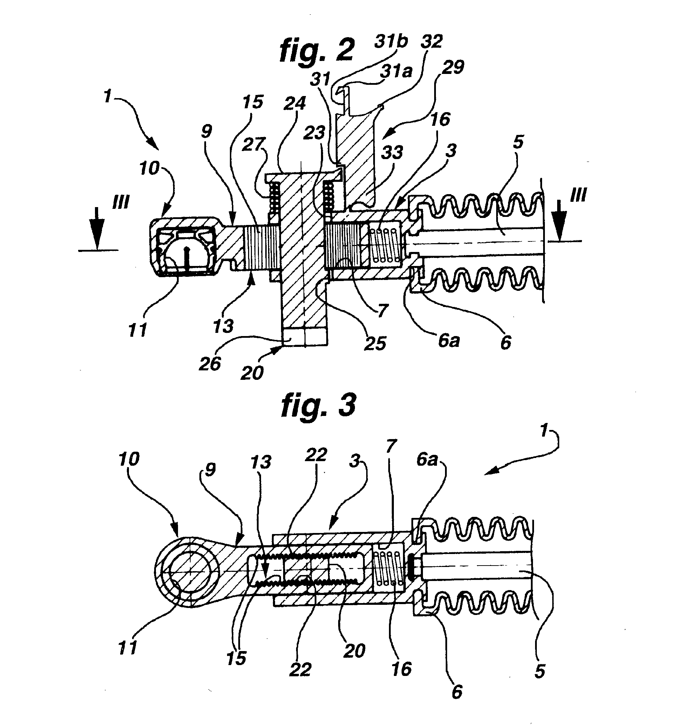

When the element 20 is in the position in which the hook 31 engages the head 24 (see Figures 1 and 2), the toothings 22 project from the body 3 so that the toothings 15 facing the cavity 13 of the member 9 are free since they are arranged facing the smooth portion of the element 20, and the member 9 can slide axially relative to the body 3. In this condition, the unit 1 can be positioned by an operator who snap-fits a corresponding spherical element of a ball joint (not shown in the drawings), for example, of a control lever of a motor-vehicle gearbox, into the seat 11 whilst gripping the unit 1 with one hand.

The tension of the cable 5 is then adjusted by moving the portion 10 of the member 9 axially away from the portion of the body 3 to which the end of the cable 5 is connected, against the resilient action of the helical spring 16, so as to put the cable 5 under tension to cancel out the play in the system.

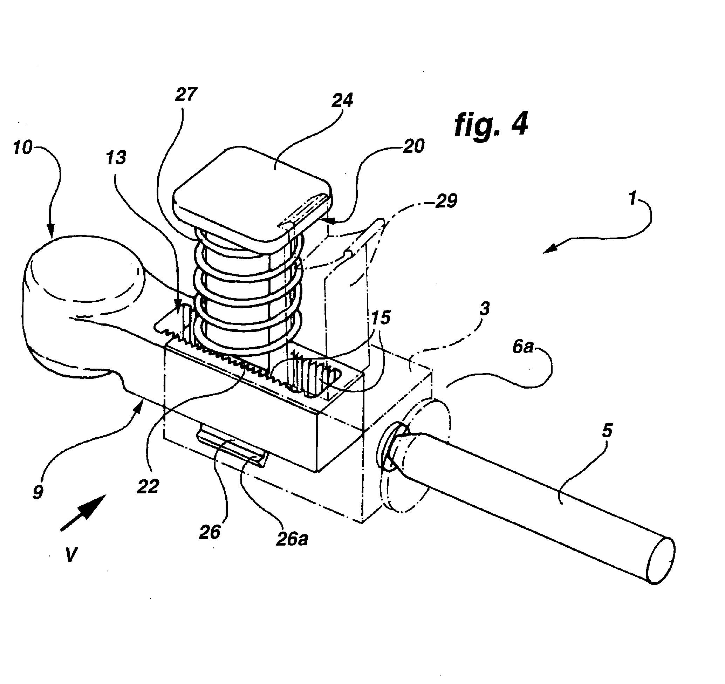

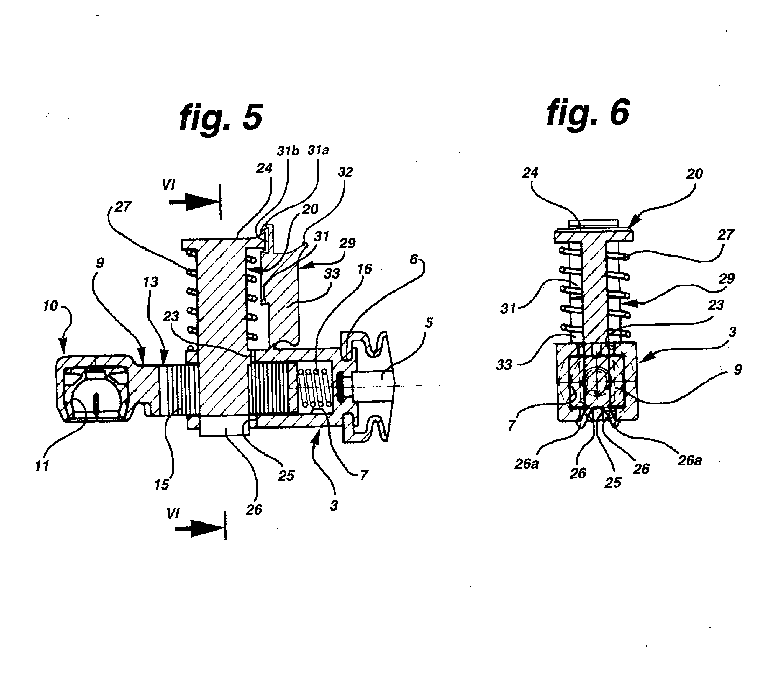

When the desired tension adjustment has been achieved, the operator can act on the operating appendage 32 so as to deform the pillar 33 slightly until the hook 31 is released from the enlarged head 24, thus leaving the spring 27 free to push the enlarged head 24 of the element 20 away from the body 3 (Figures 4 to 6). The portion of the element 20 having the toothings 22 thus reaches the condition of engagement with the toothings 15 of the member 9, locking the member transversely relative to the body 3. When the element 20 reaches this position, a portion of its head 24 snap-engages the seat 31b.

If it is necessary to modify the adjustment achieved, it suffices to act on the appendage 32 in order to space the seat 31b from the head 24, releasing the engagement between the stopping means 29 and the element 20, and to exert a pressure on the head 24 with a finger, against the action of the spring 27, so as to bring the head 24 to the position in which it is engaged by the hook 31 again. The member 9 is thus free once more to slide along the cavity 7 of the body 3, allowing a new desired adjustment of the tension of the cable 5 to be defined.

## Claims

1. A restraint and tension-adjustment unit for an elongate element, particularly a flexible control cable, comprising a main body (3) for the anchorage of the elongate element (5) and a connection member (9) which are mounted for sliding relative to one another along a general axis of the unit, in which the connection member (9) is intended for connecting the unit (1) to a movable element the position of which can be controlled as a result of the movement of the elongate element (5), and adjustable means (20) for fixing the main body (3) relative to the connection member (9),
characterized in that the fixing means include a locking element (20) which extends through both the main body (3) and the fixing member (9) and is movable along an axis transverse the general axis, the locking element (20) having a toothed portion (22) the toothing of which is parallel to the axis of its movement and can engage a portion of a corresponding toothing (15) associated with the connection member (9), the locking element (20) being able to adopt a rest position in which its toothed portion (22) is separated from the toothing (15) of the connection member (9) and an active position in which it engages the toothing (15) of the connection member (9) and in which sliding of the connection member (9) relative to the main body (3) is prevented.

2. A unit according to Claim 1, characterized in that the connection member (9) is arranged for sliding inside the main body (3).

3. A unit according to Claim 2, characterized in that both of the connection member (9) and the main body (3) have substantially prismatic shapes so as to form a prismatic coupling.

4. A unit according to any one of Claims 1 to 3, characterized in that resilient tension means (16) are disposed between the connection member (9) and the main body (3).

5. A unit according to any one of Claims 1 to 3, characterized in that the connection member (9) has an axial through cavity (13) having two opposed faces on both of which faces corresponding toothings (15) are formed.

6. A unit according to Claim 5, characterized in that the connection member (9) comprises an integral engagement portion (10) which defines a spherical seat (11) of a ball joint.

7. A unit according to any one of Claims 1 to 6, characterized in that the locking element (20) has an enlarged head (24) at one end and stop means (26, 26a) at the other end, so that the enlarged head (24) and the stop means (26, 26a) constitute opposed shoulders for limiting the sliding of the locking element (20) relative to the main body (3).

8. A unit according to Claim 7, characterized in that the stop means comprise a pair of substantially flexible legs (26) which can be snap-fitted in a lateral opening (25) of the main body (3).

9. A unit according to Claim 7 or Claim 8, characterized in that the locking element (29) has a prismatic shape and engages a pair of holes (23, 25) of corresponding shape formed in opposed faces of the main body (3), a portion of the locking element (20) in the vicinity of the stop means (26, 26a) having, on two opposed side faces, sets of teeth (22) corresponding to the toothings (15) of the connection member (9).

10. A unit according to any one of Claims 7 to 9, characterized in that the locking element (20) is urged towards the active position by a resilient member (27).

11. A unit according to Claim 10, characterized in that the resilient member is a helical spring (27) which surrounds the locking element (20) and is interposed between the main body (3) and the enlarged head (24).

12. A unit according to any one of Claims 1 to 11, characterized in that it comprises means (29) for stopping the movement of the locking element (20), the means (29) being able to hold the locking element in the rest position.

13. A unit according to Claim 12, characterized in that the stopping means (29) comprise a hook (31) which is fixed to the main body (3) and can engage the enlarged head (24) of the locking element (20).

14. A unit according to Claim 13, characterized in that the hook (31) is connected to a substantially flexible pillar (33) which is integral with the main body (3) and can be deformed manually to allow the locking element (20) to be moved under the action of the resilient member (27).

15. A unit according to Claim 14, characterized in that an auxiliary hook (31a) is associated with the stopping means (29) and can define a seat (31b) for the engagement of a portion of the enlarged head (24) when the locking element (20) is in the active position.

16. A unit according to any one of Claims 7 to 15, characterized in that the enlarged head (24) of the locking element (20) constitutes a pressure surface for the manual exertion of a pressure on the locking element (20), against the action of the resilient member (27), in order to return the locking element (20) to its rest position.
